(19) Europäisches Patentamt

European Patent Office

Office européen des brevets

(11) Publication number: **0 069 098**

**B1**

# (12) EUROPEAN PATENT SPECIFICATION

(45) Date of publication of patent specification: **09.09.87**

(51) Int. Cl.⁴: **F 16 L 21/06**

(21) Application number: **82850134.6**

(22) Date of filing: **16.06.82**

(54) **Tubular connector.**

(30) Priority: **18.06.81 SE 8103837**

(43) Date of publication of application:
**05.01.83 Bulletin 83/01**

(45) Publication of the grant of the patent:
**09.09.87 Bulletin 87/37**

(84) Designated Contracting States:
**AT BE CH DE FR GB IT LI NL**

(56) References cited:
**CA-A- 900 525**
**GB-A-1 343 602**
**GB-A-2 017 853**
**GB-A-2 038 976**
**US-A-1 726 006**
**US-A-3 474 832**

(73) Proprietor: **LINDAB VENTILATION AB**
**Grevie**
**S-269 00 Bastad (SE)**

(72) Inventor: **Andersson, Lars**
**Ljungvägen 20**
**S-269 00 Bastad (SE)**

(74) Representative: **Lenz, Franz et al**
**AWAPATENT AB Box 5117**
**S-200 71 Malmö (SE)**

Courier Press, Leamington Spa, England.

**Description**

This invention relates to a tubular connector intended for insertion into two pipes, particularly ventilation pipes, and for tight interconnection of them by expansion, which connector consists of a sheet metal element bent into tubular shape and having overlapping ends which for increase and reduction of the diameter of the connector are relatively movable with the aid of a tensioning device fixed to the connector, and first and second sealing means provided on the outer side of the connector around the circular ends thereof and between the overlapping ends thereof.

Ventilation conduits with pipes and sundry accessories, such as elbows, T-pieces etc., which for greater simplicity will hereinbelow be called only ventilation pipes, can be interconnected either by means of connectors or by one pipe end being formed with a smaller diameter than the other pipe end so that it can be inserted into said other pipe end, sealing being realized for instance by means of seals around the periphery of the insertion pipe. At larger pipe diameters, say more than 400 mm, this is difficult and time-consuming work, and leaks or flaws may easily arise. Expandable connectors have been developed for this purpose, but are relatively complicated and the tightness of the joint realized will not always be the desired one where these prior art devices are used.

GB—A—2 017 853 shows an internal sealing collar for a pipe joint in a pipeline. This collar is made of resilient material with inner clamping rings and outer annular cushions of resilient elastomeric material. Collars of this type cannot be used when splicing ventilation pipes with the above-mentioned dimensions.

The object of the present invention is to solve the problem described with the aid of a simple and reliable construction which ensures tight joints.

This object is attained in that dimension stabilizing rings are positioned around the first sealing means to locate same and that the second sealing means comprises a cloth or strip of resilient material tightly connected with at least one of the overlapping connector ends throughout the axial length of said end and being sealable with the other connector end, said cloth or strip having a length in the peripheral direction of the connector such that the overlapping ends are relatively movable with the aid of the tensioning device with retained mutual sealing effect.

The peripheral annular seals thus extend according to the invention around the entire periphery of the connector and are made in one piece or have interconnected ends, for which reason the seals are expandable together with the connector into tight engagement with the inner sides of the interconnected pipes. Upon expansion the overlapping end edges of the connector are further kept in tight engagement with one another by means of the cloth or strip, all of which results in that very tight joints are obtained.

A large-diameter connector of the above-mentioned type will necessarily be rather weak and "flabby" because the ends of the connector are not fixedly interconnected but overlap each other, which may involve problems in handling the connector. However, this problem is solved according to the present invention with the aid of the dimension stabilizing rings which may be steel bands extending around the connector to retain a diameter thereof, which is smaller than that of the pipes to be interconnected, said steel bands having a predetermined breaking point or weakened point which is adapted to tear when the connector upon interconnection of pipes is expanded by means of the tensioning device. The steel bands thus retain the desired diameter of the connector and also give the connector the desired stability so that it can be handled as a pipe with secured-together ends. When the seals have an axial flange bearing against the pipe periphery, the steel bands are suitably positioned around the connector on top of said flange, whereby the seals are also kept in position by means of the steel bands.

The invention will now be described in greater detail below with reference to the accompanying drawings which illustrate embodiments of the invention.

In the drawings:

Fig. 1 is a perspective view of a connector according to the invention;

Fig. 2 on a greater scale shows a section along line II—II in Fig. 1;

Fig. 3 shows a seal in cross-section, which is kept in position by means of a steel band;

Figs. 4a and 4b are side views of the seal and illustrate how a weakening of the steel band can be provided;

Fig. 5 shows another kind of weakening of the steel band.

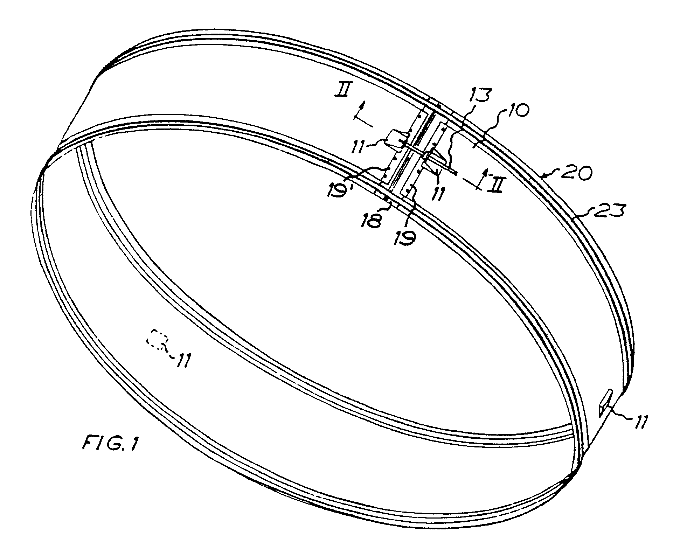

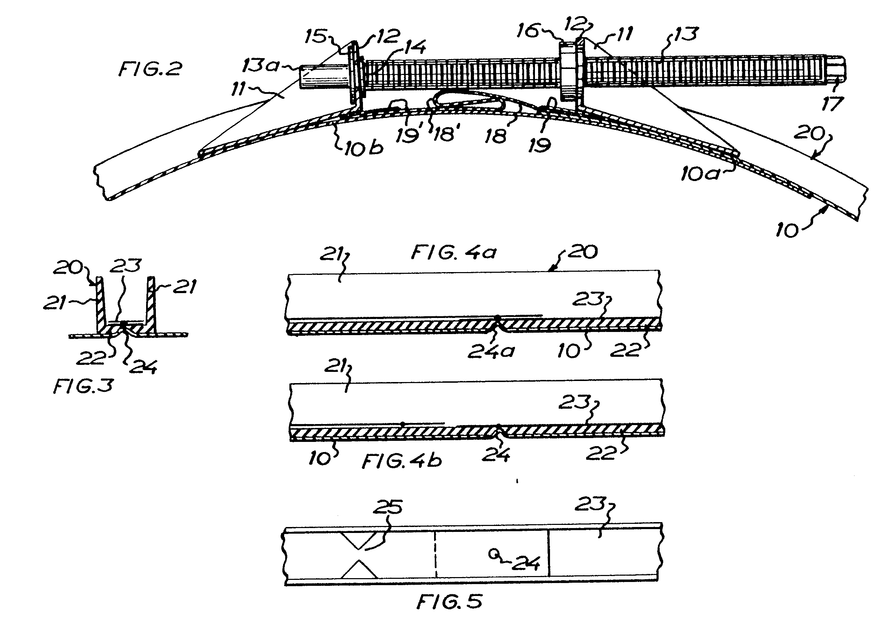

Fig. 1 is a perspective view of a tubular connector intended for insertion into the facing ends of two pipes which are to be joined together. As already mentioned, the pipes may comprise both straight pipe sections and elbows, T-pieces etc. The connector consists of a sheet metal element 10 which is bent into tubular shape and has overlapping ends 10a and 10b, as shown in Fig. 2. A lug 11 is secured adjacent the edge of the pipe end 10a, while another lug 11 is secured at a distance from the edge of the pipe end 10b. As shown in Figs. 1 and 2, the lugs 11 comprise a part connected with the outer surface of the pipe 10, a part 12 radially extending from said first part, and reinforcing portions extending between said parts. A screw 13 passes through registering openings in the radial part 12 of the lugs 11. The screw 13 has a front portion 13a of reduced diameter, which extends through the opening of the lug connected with the pipe end 10b, so that the shoulder 14 between the screw 13 and the screw portion 13a bears against one side of the part 12, while a washer 15 is secured to the portion 13a on the opposite side of the part 12, whereby the screw 13 is freely rotatably but axially immovably connected with said lug 11. The other lug 11 has in its flange 12 a nut 16 fixedly connected to the flange and having internal threads meshing with the threads of the screw 13. The end of the screw 13 opposite to the end portion 13a has a hexagon head 17. It will be realized that by rotation of the screw 13 the lugs 11 and as a consequence the pipe ends 10a and 10b connected therewith can be moved towards and away from each other so that the diameter of the connector 20 is changed.

As already mentioned, it is imperative that a connector of this type is tightly connected with the pipes to be joined together. To this end, a cloth 18 of rubber or other resilient material is fastened to the end 10a of the connector 10 by means of fastening strip 19 which is connected with the end 10a adjacent the end edge by spot welding. The cloth 18 extends throughout the axial length of the connector and, according to Fig. 2, the other end of the cloth is connected with the end 10b of the connector 10 by means of a fastening strip 19' (also secured by spot welding) at a considerable distance from the end edge of the pipe end 10b. The cloth 18 is of such a length in the peripheral direction that in normal position a fold 18' is formed, which permits a considerable expansion of the connector.

The ends 10a, 10b can also be sealed with respect to one another by means of a cloth 18 secured to the underside of the end 10a at a distance from the end edge and extending some distance beyond said end edge. In this case the end 10b bears against the side of the cloth 18 remote from the end 10a in a freely movable state in relation to the cloth 18 so that the ends 10a, 10b can be moved with retained sealing effect.

Sealing rings 20 are secured around the periphery of the connector. Said sealing rings thus extend over the joint between the overlapping ends 10a, 10. In the embodiment illustrated the seals 20 are of U-shape with radially projecting sealing lips 21 and a peripheral flange 22 interconnecting said lips. The seals are kept in position, preferably in recesses provided for this purpose around the periphery of the connector, by means of steel bands 23 clamped around the connector and secured by spot welding, as shown at 24. These steel bands 23 impart stability to the connector with the overlapping ends, but of course also prevent expansion of the connector. For this reason, the steel band has a weakened spot weld 24a at the point where the ends of the steel band 23 overlap so that this spot weld can break when the connector is expanded by rotation of the screw 13. Instead of a spot weld thus weakened the band may have a normal spot weld 24 which connects the overlapping band ends together, and adjacent said connection a predetermined breaking point 25.

The described connector is used in the following manner for joining together two pipes. The connector is supplied in the manner illustrated in Fig. 1, with the lugs 11 placed rather close together by means of the screw 13 and with the steel bands 23 clamped about the outer periphery of the connector and connected to the sheet metal element 10 by spot welding as shown at 24. The steel bands 23 are provided with the weakened point as shown either in Fig. 4a, 4b or 5. In this state the connector has a smaller diameter than the pipes to be joined together and can readily be inserted into one pipe, whereupon the other pipe is passed onto the portion of the connector projecting from the first pipe. In a preferred embodiment of the invention, lugs 11 are placed at some points of the outer periphery of the pipe directly over the longitudinal centre of the connector. Said lugs 11 serve as stops when the connector is inserted into one pipe end or when a pipe end is passed onto the connector. Thus, thanks to the steel bands 23 the connector can be handled as a stable unit and easily brought in position. The screw 13 is then rotated by means of a drilling machine having a socket which is passed over the head 17 of the screw 13. The lugs 11 are now moved apart and the connector is expanded with such a force that the weakened spot weld 24a according to Figs. 4a and 4b or the predetermined breaking point 25 according to Fig. 5 breaks and the seals 20 are clamped between the outer side of the connector 10 and the inner sides of the joined-together pipes. The fact that the steel bands have now released their hold is of no importance from the viewpoint of sealing, since the pressure brought about by the expansion of the connector firmly urges the seal against the above-mentioned surfaces. At the expansion the ends 10a, 10b are moved apart and the fold 18' is straightened to an extent that depends upon the expansion. The axial seal will also be very satisfactory.

After the connector has been brought in position and expanded into tight engagement with the joined-together pipes the connector is fixed by means of self-cutting screws which are screwed through the walls of the joined-together pipes and the connector. In a preferred embodiment of the invention the head 17 of the screw 13 has the same shape and dimensions as the screws which are used to fix the connector, whereby the same tool can be used to rotate the screw and drive the self-cutting screws, which is rational on a building site.

The construction described can be modified in several respects. The lugs 11 serving as spacers or stops which limit the insertion of the connector into pipes to be joined together, can be replaced by beads or like means punched out of the connector wall. If use is made of lugs 11 one or more of these may have a hole or a fastening portion of some kind, with the aid of which the connector and the pertaining pipe are suspended for instance from a ceiling. The device for the expansion of the connector is a screw device in the embodiment described, but this device can be replaced by a lever means having a handle which when depressed expands the connector to the desired extent. Of course, the seals around the connector need not be lip seals, but may be for instance O-rings or seals having another cross-sectional shape. In that case the steel bands 23 are usually separated from the seals. The steel bands can also be replaced by bands of another kind, for instance of textile or plastics, which either like the steel bands have a predetermined breaking point or the like or are of such a strength that they break automatically when the connector is expanded. It is also conceivable to use flat springs instead of bands, which will then expand together with the connector and the seals. The cloth 18 need not be fastened by means of strips but can be united with the connector by gluing.

It is important that the connector is expanded so that a complete or anyway satisfactory seal is obtained. Therefore, an indicating means can be provided in conjunction with the expanding device, which means shows the current expansion or has a marking which indicates when the minimum expansion has been reached. The indicating means can be for instance a strip with markings thereon, which is fixed to the cloth 18 between the overlapping ends. The outer end 10a will then be drawn along said strip and the degree of expansion can readily be established. Instead of the strip, the cloth itself may have markings.

It will be realized from the above description that the invention provides a readily handled and easily mounted connector which can be expanded in a simple manner so that a satisfactory seal is obtained. If it is desired for some reason to disassemble the joint this can easily be done by unscrewing the self-cutting screws and reducing the diameter of the connector by rotation of the screw 13.

**Claims**

1. A tubular connector intended for insertion into two pipes, particularly ventilation pipes, and for tight interconnection of them by expansion, which connector consists of a sheet metal element (10) bent into tubular shape and having overlapping ends (10a, 10b) which for increase and reduction of the diameter of the connector are relatively movable with the aid of a tensioning device (11—17) fixed to the connector, and first and second sealing means (20, 18) provided on the outer side of the connector around the circular ends thereof and between the overlapping ends (10a, 10b) thereof, characterized in that dimension stabilizing rings (23) are positioned around the first sealing means (20) to locate same and that the second sealing means comprises a cloth (18) or strip of resilient material tightly connected with at least one (10a) of the overlapping connector ends (10a, 10b) throughout the axial length of said end and being sealable with the other connector end, said cloth (18) or strip having a length in the peripheral direction of the connector such that the overlapping ends (10a, 10b) are relatively movable with the aid of the tensioning device (11, 17) with retained mutual sealing effect.

2. A connector as claimed in claim 1, characterised in that the cloth (18) is fastened adjacent the edge of one end (10a) by means of a fastening strip (19) and spaced from the edge of the other end (10b) by means of a fastening strip (19'), the cloth being arranged in folds (18') to permit expansion of the connector.

3. A connector as claimed in claim 1, characterised in that the cloth (18) is secured to the underside of one end (10a) spaced from the end edge and that the other end (10b) freely movably bears against the face of the cloth (18) remote from the first end (10a).

4. A connector as claimed in claim 1, 2 or 3, characterised in that the rins (20, 23) have dimension stabilizing bands (23) which are fixed around the connector to maintain a diameter thereof which is smaller than that of the pipes to be joined together, said bands (23) being arranged to tear when the connector at the joining together of pipes is expanded by means of the tensioning device (11, 17).

5. A connector as claimed in claim 4, characterised in that the bands (23) are steel bands which are provided with a predetermined breaking point or weakened portion (24a, 25).

6. A connector as claimed in claim 1, 2 or 3, characterised in that flat springs are fixed around the connector to maintain a diameter thereof, which is smaller than that of the pipes to be joined together.

7. A connector as claimed in any of claims 4 or 5, in which the peripheral seals (20) are lip seals with an axial flange (22) engaging the pipe periphery, characterised in that the bands (23) are arranged around the connector over the axial flange (22) of the seals (20) in order also to keep the seals (20) in position.

8. A connector as claimed in any of the preceding claims, characterised in that the tensioning device (11, 17) comprises a first lug (11) which is fixed adjacent one end edge of the connector, and a second lug (11) which is fixed at a distance from the other end edge of the connector and a screw (13) which is freely rotatably, but axially immovably mounted in one lug (11) and engages a threaded bore in the other lug (11) so that the lugs (11) and thereby the connector ends are movable towards and away from each other by rotation of the screw (13).

9. A connector as claimed in any of the preceding claims, characterised by indicating means in conjunction with the joint between the connector ends (10a, 10b), indicating the degree of expansion of the connector.

10. A connector as claimed in claim 8, characterised in that the screw (13) has a head (17) of the same shape and dimensions as those of self-cutting screws which after the expansion of the connector are used to fix the connector in the joined-together pipes so that the same tool, usually a drilling machine, is usable for driving both the screw (13) and the self-cutting screws.

**Patentansprüche**

1. Rohrförmiges Verbindungsstück zum Einsatz in zwei Rohre, insbesondere Lüftungsrohre, und zur dichten Verbindung derselben durch Aufweitung, bestehend aus einem zur Form eines Rohres gebogenen Metallblechelement (10) mit einander überlappenden Enden (10a, 10b), die zur Vergrössung und Verminderung des Durchmessers des Verbindungsstücks mit Hilfe einer am Verbindungsstück befestigten Spannvorrichtung (11—17) im Verhältnis zueinander bewegbar sind, sowie mit ersten und zweiten Dichtungsgliedern (20, 18) an der Aussenseite des Verbindungsstücks rund um dessen kreisförmige Enden und zwischen den überlappenden Enden (10a, 10b) des Verbindungsstücks, dadurch gekennzeichnet, dass rund um das ersten Dichtungsglied (20) dimensionsstabilisierende Ringe (23) zu dessen Lokalisierung angebracht sind, und dass das zweite Dichtungsglied eine Bahn (18) oder einen Streifen aus elastischem Werkstoff umfasst, der mit zumindest einem (10a) der überlappenden Enden (10a, 10b) des Verbindungsstücks über die gesamte axiale Länge dieses Endes verbunden ist und mit dem anderen Ende des Verbindungsstücks abdichtbar ist, wobei die genannte Bahn (18) oder der Streifen in der Umfangrichtung des Verbindungsstücks eine solche Länge hat, dass die überlappenden Enden (10a, 10b) unter Aufrechterhaltung einer gegenseitigen Abdichtung mit Hilfe der Spannvorrichtung (11, 17) im Verhältnis zueinander bewegbar sind.

2. Verbindungsstück nach Anspruch 1, dadurch gekennzeichnet, dass die Bahn (18) nahe der Kante des einen Endes (10a) mittels eines Befestigungsstreifens (19) und im Abstand von der Kante des anderen Endes (10b) mittels eines Befestigungsstreifens (19') befestigt ist, wobei die Bahn in Falten (18') gelegt ist, um eine Aufweitung des Verbindungsstücks zu gestatten.

3. Verbindungsstück nach Anspruch 1, dadurch gekennzeichnet, dass die Bahn (18) an der Unterseite des einen Endes (10a) im Abstand von dessen Kante befestigt ist, und dass das andere Ende (10b) im Abstand vom ersten Ende (10a) frei beweglich gegen die Fläche der Bahn (18) anliegt.

4. Verbindungsstück nach Anspruch 1, 2 oder 3, dadurch gekennzeichnet, dass die Ringe (20, 23) dimensionsstabilisierende Bänder (23) aufweisen, die rund um das Verbindungsstück befestigt sind, um einen Durchmesser desselben aufrechtzuerhalten, welcher kleiner ist als der Durchmesser der miteinander zu verbindenden Rohre, wobei die Bänder (23) so angeordnet sind, dass sie aufreissen, wenn das Verbindungsstück beim Verbinden der Rohre mittels der Spannvorrichtung (11, 17) aufgeweitet wird.

5. Verbindungsstück nach Anspruch 4, dadurch gekennzeichnet, dass die Bänder (23) Stahlbänder sind, die mit einer Sollbruchstelle oder geschwächten Zone (24a, 25) versehen sind.

6. Verbindungsstück nach Anspruch 1, 2 oder 3, dadurch gekennzeichnet, dass rund um das Verbindungsstück flache Federn befestigt sind, die zur Erhaltung eines Durchmessers des Verbindungsstücks dienen, welcher kleiner ist als der Durchmesser der miteinander zu verbindenden Rohre.

7. Verbindungsstück nach Anspruch 4 oder 5, bei dem die peripherischen Dichtungen (20) Lippendichtungen mit einem axialen Flansch (22) sind, der gegen den Rohrumfang anliegt, dadurch gekennzeichnet, das die Bänder (23) rund um das Verbindungsstück über dem axialen Flansch (22) der Dichtungen (20) angeordnet sind, um die Dichtungen (20) an ihrem Platz zu halten.

8. Verbindungsstück nach einem der vorhergehenden Ansprüche, dadurch gekennzeichnet, dass die Spannvorrichtung (11, 17) eine erste Nase (11) umfasst, die nahe der einen Endkante des Verbindungsstücks befestigt ist, sowie eine zweite Nase (11), die im Abstand von der anderen Endkante des Verbindungsstücks befestigt ist, und eine Schraube (13), die frei drehbar, jedoch axial unbeweglich in der einen Nase (11) montiert ist und in eine Gewindebohrung in der anderen Nase (11) eingreift, so dass die Nasen (11) und somit die Enden des Verbindungsstücks bei Drehung der Schraube (13) gegeneinander oder auseinander beweglich sind.

9. Verbindungsstück nach einem der vorhergehenden Ansprüche, gekennzeichnet durch ein im Anschluss an den Stoss zwischen den Enden (10a, 10b) des Verbindungsstücks angeordnetes Anzeigeglied, das das Ausmass der Aufweitung des Verbindungsstücks anzeigt.

10. Verbindungsstück nach Anspruch 8, dadurch gekennzeichnet, dass die Schraube (13) einen Kopf (17) hat, der dieselbe Form und dieselben Abmessungen wie nach dem Aufweiten des Verbindungsstücks zu dessen Befestigung in den zusammengeführten Rohren benutzte Gewindeschneidschrauben aufweist, so dass das gleiche Werkzeug, üblicherweise eine Bohrmaschine, zum Eintreiben der Schraube (13) und auch der Gewindeschneidschrauben benutzt werden kann.

**Revendications**

1. Organe tubulaire de raccordement destiné à être introduit dans deux tuyauteries, notamment des tuyauteries de ventilation, et à assurer leur connexion intime par expansion, l'organe de raccordement comprenant un élément métallique en feuille (10) replié sous forme tubulaire et ayant des extrémité en recouvrement (10a, 10b) qui sont mobiles l'une par rapport à l'autre, afin que le diamètre de l'organe de raccordement puisse être augmenté et réduit, à l'aide d'un dispositif (11—17) d'application de forces, fixé à l'organe de raccordement, et un premier et un second dispositif d'étanchéité (20, 18) placés à la face externe de l'organe de raccordement autour des extrémités circulaires de celui-ci et entre les extrémités en recouvrement (10a, 10b), caractérisé en ce que des anneaux (23) de stabilisation de dimension sont placés autour du premier dispositif d'étanchéité (20) afin qu'ils assurent le positionnement de celui-ci, et en ce que le second dispositif d'étanchéité est une étoffe (18) ou une bande d'un matériau élastique raccordée intimement à l'une (10a) au moins des extrémités en recouvrement (10a, 10b) de l'organe de raccordement sur toute la longueur axiale de cette extrémité et pouvant coopérer de manière étanche avec l'autre extrémité de l'organe de raccordement, l'étoffe (18) ou bande ayant, en direction périphérique par rapport à l'organe de raccordement, une longueur telle que les extrémités en recouvrement (10a, 10b) sont mobiles l'une par rapport à l'autre à l'aide du dispositif (11, 17) d'application de forces, avec conservation de l'effet mutuel d'étanchéité.

2. Organe de raccordement selon la revendication 1, caractérisé en ce que l'étoffe (18) est fixée près du bord d'une première extrémité (10a) par une bande de fixation (19) et est placée à distance du bord de l'autre extrémité (10b) par une bande de fixation (19'), l'étoffe formant des plis (18') permettant l'expansion de l'organe de raccordement.

3. Organe de raccordement selon la revendication 1, caractérisé en ce que l'étoffe (18) est fixée à la face inférieure d'une première extrémité (10a) à distance du bord d'extrémité et en ce que l'autre extrémité (10b) mobile librement est en appui contre la face de l'étoffe (18) qui est distante de la première extrémité (10a).

4. Organe de raccordement selon l'une quelconque des revendications 1 à 3, caractérisé en ce que les anneaux (20, 23) ont des bandes (23) de stabilisation de dimension qui sont fixées autour de l'organe de raccordement afin qu'il conserve son diamètre qui est inférieur à celui des tuyauteries à raccorder, les bandes (23) étant disposées de manière qu'elles se cassent lorsque l'organe de raccordement est dilaté par le dispositif d'application de force (11, 17) lors du raccordement des tuyauteries.

5. Organe de raccordement selon la revendication 4, caractérisé en ce que les bandes (23) sont des bandes d'acier qui ont un point prédéterminé de cassure ou une partie affaiblie (24a, 25).

6. Organe de raccordement selon l'une quelconque des revendications 1 à 3, caractérisé en ce que des ressorts plats sont fixés autour de l'organe de raccordement afin qu'ils assurent la conservation de son diamètre qui est inférieur à celui des tuyauteries à raccorder.

7. Organe de raccordement selon l'une des revendications 4 et 5, dans lequel les joints périphériques (20) sont des joints à lèvres ayant un flasque axial (22) coopérant avec la périphérie de la tuyauterie, caractérisé en ce que les bandes (23) sont placées autour de l'organe de raccordement sur le flasque axial (22) des joints (20) afin que les joints (20) soient aussi maintenus en position.

8. Organe de raccordement selon l'une quelconque des revendications précédentes, caractérisé en ce que le dispositif (11, 17) d'application de forces comporte une première patte (11) qui est fixée près du bord d'une première extrémité de l'organe de raccordement, et une seconde patte (11) qui est fixée à une certaine distance du bord de l'autre extrémité de l'organe de raccordement, et une vis (13) qui peut tourner librement mais qui est montée de manière qu'elle ne puisse pas se déplacer axialement dans une première patte (11) et qui coopère avec un trou taraudé de l'autre patte (11) si bien que les pattes (11) et ainsi les extrémités de l'organe de raccordement sont mobiles en translation l'une par rapport à l'autre, lors de la rotation de la vis (13).

9. Organe de raccordement selon l'une quelconque des revendications précédentes, caractérisé par un dispositif indicateur associé au joint formé entre les extrémités (10a, 10b) de l'organe de raccordement, indiquant le degré d'expansion de l'organe de raccordement.

10. Organe de raccordement selon la revendication 8, caractérisé en ce que la vis (13) a une tête (17) dont la forme et les dimensions sont les mêmes que celles de vis auto-taraudeuses qui, après expansion de l'organe de raccordement, sont utilisées pour la fixation de l'organe de raccordement aux tuyauteries raccordées, si bien que le même outil, habituellement une perceuse, peut être utilisé pour l'entraînement à la fois de la vis (13) et des vis auto-taraudeuses.

FIG. 1

FIG.2

FIG.3

FIG.4a

FIG.4b

FIG.5